# EUROPEAN PATENT SPECIFICATION

(11) **EP 3 453 603 B1**
(45) Date of publication and mention of the grant of the patent: **22.09.2021**
(21) Application number: 17888379.9
(22) Date of filing: 26.12.2017
(51) Int. Cl.: B62L 3/08, B60T 7/04, B60T 11/06, B62K 19/38, B62L 3/04

(54) **SADDLED VEHICLE**
SATTELFAHRZEUG
VÉHICULE À SELLE

(30) Priority: 28.12.2016 JP 2016255925
(43) Date of publication of application: 13.03.2019
(73) Proprietor: Yamaha Hatsudoki Kabushiki Kaisha, Iwata-shi, Shizuoka 438-8501 (JP)
(72) Inventor: SUGIYAMA, Masazumi, Iwata-shi Shizuoka 438-8501 (JP)
(74) Representative: Grünecker Patent- und Rechtsanwälte PartG mbB
(86) International application number: PCT/JP2017/046621
(87) International publication number: WO 2018/124065

(56) References cited:
- JP-A- 2001 278 170
- JP-A- 2001 278 170
- JP-A- 2001 278 170
- JP-A- 2016 175 442

## Description

### TECHNICAL FIELD

The present invention relates to a straddled vehicle, particularly to a straddled vehicle including a combined brake device.

### BACKGROUND ART

Document JP 2001 278170 A discloses a straddled vehicle comprising a combined brake device according to the preamble of claim 1.
Furthermore, there is a type of straddled vehicle that includes a combined brake device in view of enhancement in commercial value in the market. In transmitting an operating force of a brake pedal, the combined brake device distributes the operating force to a rear brake device and a front brake device, whereby the rear brake device and the front brake device are actuated in a linked manner.

For example, a combined brake device described in PTL 1 includes a combined brake wire, a brake rod, a coupling link, an equalizer and a bell crank. The combined brake wire is connected to the front brake device. The brake rod is connected to the rear brake device. The equalizer is connected to the brake rod, while being connected to the combined brake wire through the bell crank. The coupling link couples a brake pedal and the equalizer.

When the brake pedal is pressed down, the motion of the brake pedal is transmitted to the equalizer through the coupling link. Accordingly, the equalizer pulls the brake rod, whereby the rear brake device is turned into a braking state. Additionally, the equalizer pulls the combined brake cable through the bell crank, whereby the front brake device is turned into a braking state. Thus, the equalizer distributes the operating force of the brake pedal to the front brake device and the rear brake device.

### CITATION LIST

### PATENT LITERATURE

PTL 1: Japan Patent No. 3769169

### SUMMARY OF THE INVENTION

### Technical Problems

In the combined brake device of PTL 1, which shows the features of the preamble of claim 1, the combined brake wire is not directly connected to the equalizer, but is indirectly connected to the equalizer through the bell crank. Thus, the number of components, included in a path of transmitting the operating force of the brake pedal, is increased in the structure that the combined brake wire is indirectly connected to the equalizer in comparison with the structure that the combined brake wire is directly connected to the equalizer.

It is concerned that increase in number of components of the combined brake device results in increase in size of the combined brake device. By contrast, in the combined brake device of PTL 1, the bell crank is disposed concentrically to the brake pedal. According to such a layout, increase in size of the combined brake device can be inhibited, while the function of the combined brake device is kept intact. However, when the bell crank is disposed concentrically to the brake pedal, the position of the bell crank is limited by the brake pedal in the axis direction.

For example, as shown in FIG. 3 of PTL 1, the bell crank is located in part laterally outside the brake pedal in the axis direction. Detailedly, the bell crank bends and extends laterally outward from a laterally inside position in the vehicle width direction. Therefore, the inventor of the present invention noticed that a torsional force is likely to act on the bell crank, and therefore, there is still room for enhancement in transmission efficiency.

Furthermore, in the combined brake device of PTL 1, the bell crank is disposed concentrically to the brake pedal, whereby the bell crank and the brake pedal are disposed in adjacent to each other. Because of this, other members connected to the bell crank and the brake pedal are disposed in a small space, whereby these members are connected to each other at small angles, respectively. To enhance efficiency of transmitting the operating force, it is preferable to connect respective members to each other at angles of approximately 90 degrees. However, in the combined brake device of PTL 1, respective members are connected to each other at angles of less than 90 degrees. Hence, the inventor noticed that there is still room for enhancement in efficiency of transmitting the operating force among the respective members in the combined brake device. Even at a conventional level of transmission efficiency, sufficiently high functionality can be achieved in the combined brake device. However, comfortableness in operation of braking can be enhanced by enhancement in transmission efficiency.

It is an object of the present invention to inhibit increase in size of a combined brake device, and simultaneously, enhance comfortableness in operation of braking.

### Solution to Problems

A straddled vehicle according to an aspect of the present invention includes a vehicle body frame, a steering device, a front wheel, a rear wheel, a front brake device, a rear brake device, a brake pedal and a combined brake device. The vehicle body frame includes a head pipe. The steering device is turnably supported by the head pipe, and is operated with hands of a driver. The front wheel is rotatably supported by the steering device. The rear wheel is disposed backward of the steering device and the front wheel. The front brake device brakes the front wheel. The rear brake device brakes the rear wheel. The brake pedal is disposed between the front wheel and the rear wheel in a vehicle back-and-forth direction. The brake pedal is supported by the vehicle body frame so as to be rotatable about a pedal rotational axis, and is operated with a foot of the driver. The combined brake device causes the rear brake device and the front brake device to be actuated in a linked manner in response to operating the brake pedal.

The combined brake device includes a combined brake cable, a rear brake transmission member, a first link member, an equalizer and a second link member. The combined brake cable is connected to the front brake device. The rear brake transmission member is connected to the rear brake device. The first link member is rotatably connected to the brake pedal, and is moved in conjunction with rotation of the brake pedal. The equalizer includes a first end and a second end, and is rotatably connected at a part thereof located between the first end and the second end to the first link member. The equalizer is moved in conjunction with movement of the first link member. The second link member is attached to the vehicle body frame so as to be rotatable about a link rotational axis. The second link member is rotatably connected to the equalizer, and is rotated about the link rotational axis in conjunction with movement of the equalizer.

The combined brake device includes a pedal connecting portion, a first link connecting portion, a second link connecting portion, a front brake connecting portion and a rear brake connecting portion. The pedal connecting portion connects the brake pedal and the first link member. The first link connecting portion connects the first link member and the equalizer. The second link connecting portion connects the equalizer and the second link member. The front brake connecting portion connects the second link member and the combined brake cable. The front brake connecting portion pulls the combined brake cable when the second link member is rotated in conjunction with the movement of the equalizer. The rear brake connecting portion connects the first end of the equalizer and the rear brake transmission member. The rear brake connecting portion pulls the rear brake transmission member when the equalizer is moved.

The link rotational axis is located backward of the pedal rotational axis. The front brake connecting portion is located backward of the pedal rotational axis and forward of the link rotational axis.

In the straddled vehicle according to the present aspect, the link rotational axis is located backward of the pedal rotational axis. In other words, the second link member is disposed non-concentrically to the brake pedal. Therefore, the position of the second link member is not limited by the brake pedal in the axis direction, whereby a torsional force can be inhibited from acting on the second link member. Additionally, the second link member and the brake pedal are disposed away from each other. Because of this, reduction in each of the connection angles among respective members can be inhibited. Accordingly, transmission efficiency can be enhanced among the respective members of the combined brake device, whereby comfortableness in operation of braking can be enhanced.

The front brake connecting portion is located backward of the pedal rotational axis and forward of the link rotational axis. In other words, the second link member is connected to the front brake cable in a position between the pedal rotational axis and the link rotational axis in the vehicle back-and-forth direction. Because of this, increase in size of the combined brake device can be inhibited compared to a configuration that the front brake connecting portion is located forward of the pedal rotational axis or backward of the link rotational axis.

The first link member may extend backward from the pedal connecting portion. The pedal connecting portion may be moved forward when the brake pedal is rotated. The pedal connecting portion may be located backward of the pedal rotational axis. In this case, it is possible to enhance efficiency of transmitting the operating force from the brake pedal to the first link member.

A first angle, formed between the combined brake cable and a line segment connecting the front brake connecting portion and the link rotational axis, is an obtuse angle in a condition that the brake pedal is in a zero stroke position. The first angle is an acute angle in a condition that the brake pedal is in a full stroke position. In this case, when the brake pedal is operated, the first angle is changed from the obtuse angle to the acute angle. Therefore, in response to operating the brake pedal, the first angle varies in an angular range including 90 degrees. Accordingly, it is possible to enhance efficiency of transmitting the operating force from the second link member to the combined brake cable.

A second angle, formed between a line segment connecting the pedal connecting portion and the pedal rotational axis and a line segment connecting the pedal connecting portion and the first link connecting portion, may be an obtuse angle in the condition that the brake pedal is in the zero stroke position. The second angle may be an acute angle in the condition that the brake pedal is in the full stroke position. In this case, when the brake pedal is operated, the second angle is changed from the obtuse angle to the acute angle. Therefore, in response to operating the brake pedal, the second angle varies in an angular range including 90 degrees. Accordingly, it is possible to enhance efficiency of transmitting the operating force from the brake pedal to the first link member.

A third angle, formed between the rear brake transmission member and a line segment connecting the rear brake connecting portion and the first link connecting portion, may be an obtuse angle in the condition that the brake pedal is in the zero stroke position. The third angle may be an acute angle in the condition that the brake pedal is in the full stroke position. In this case, when the brake pedal is operated, the third angle is changed from the obtuse angle to the acute angle. Therefore, in response to operating the brake pedal, the third angle varies in an angular range including 90 degrees. Accordingly, it is possible to enhance efficiency of transmitting the operating force from the equalizer to the rear brake transmission member.

The front brake connecting portion may be located above the pedal rotational axis.

The front brake connecting portion may be located below the link rotational axis.

The straddled vehicle may further include an exhaust pipe. An engine is supported by the vehicle body frame. The exhaust pipe is connected to the engine. A lower end of the second link member may be located above a bottom of the exhaust pipe. In this case, the combined brake device can be inhibited from affecting the lowest height of the vehicle from the ground.

The link rotational axis, the second link connecting portion and the first link connecting portion may be located in straight alignment in a condition that the brake pedal is located in a predetermined position within a motion range thereof. In this case, it is possible to enhance efficiency of transmitting the operating force from the first link member through the equalizer to the second link member.

The combined brake device may further include a stopper. The stopper may restrict excessive rotation of the second link member. In this case, even in occurrence of sagging of the combined brake cable, the second link member is prevented from excessively rotating by the stopper. When the second link member is not prevented from excessively rotating by the stopper, the stroke of the brake pedal increases in occurrence of sagging of the combined brake cable. In this case, deterioration in comfortableness in operation of the brake pedal is concerned. By contrast, when the second link member is prevented from excessively rotating by the stopper, increase in stroke of the brake pedal is inhibited even in occurrence of sagging of the combined brake cable. Accordingly, comfortableness in operation of the brake pedal can be enhanced.

The straddled vehicle may further include a front urging member and a rear urging member. The front urging member urges the combined brake cable in a direction to keep the front brake device in an unbraking state. The rear urging member urges the rear brake transmission member in a direction to keep the rear brake device in an unbraking state. An attachment load of the front urging member is greater than a sum of a slide resistance of the combined brake cable and a value obtained by multiplying an urging force of the rear urging member by a lever ratio of the equalizer.

In a well-known combined brake device, a delay spring is attached to either an equalizer or a bell crank. The delay spring urges the equalizer oppositely to a direction in which the equalizer pulls the combined brake cable. The delay spring causes the front brake device to start braking later than the timing of braking by the rear brake device. By contrast, when the attachment load of the front urging member is set as described above, the front urging member is enabled to have the function of the well-known delay spring. Accordingly, the delay spring can be omitted, whereby the combined brake device can be reduced in size.

### Advantageous Effects of Invention

According to the present invention, increase in size of a combined brake device can be inhibited, and simultaneously, comfortableness in operation of braking can be enhanced.

### BRIEF DESCRIPTION OF THE DRAWINGS

FIG. 1 is a right side view of a straddled vehicle according to an exemplary embodiment.
FIG. 2 is a front view of the straddled vehicle.
FIG. 3 is a right side view of part of the straddled vehicle.
FIG. 4 is a schematic diagram showing a braking system of the straddled vehicle.
FIG. 5 is a right side view of a combined brake device.
FIG. 6 is a cross-sectional view of FIG. 5 taken along line VI-VI.
FIG. 7 is a cross-sectional view of FIG. 5 taken along line VII-VII.
FIG. 8 is a cross-sectional view of FIG. 5 taken along line VIII-VIII.
FIG. 9 is a diagram showing motions of the combined brake device.
FIG. 10 is a diagram showing motions of the combined brake device.

### DESCRIPTION OF EMBODIMENTS

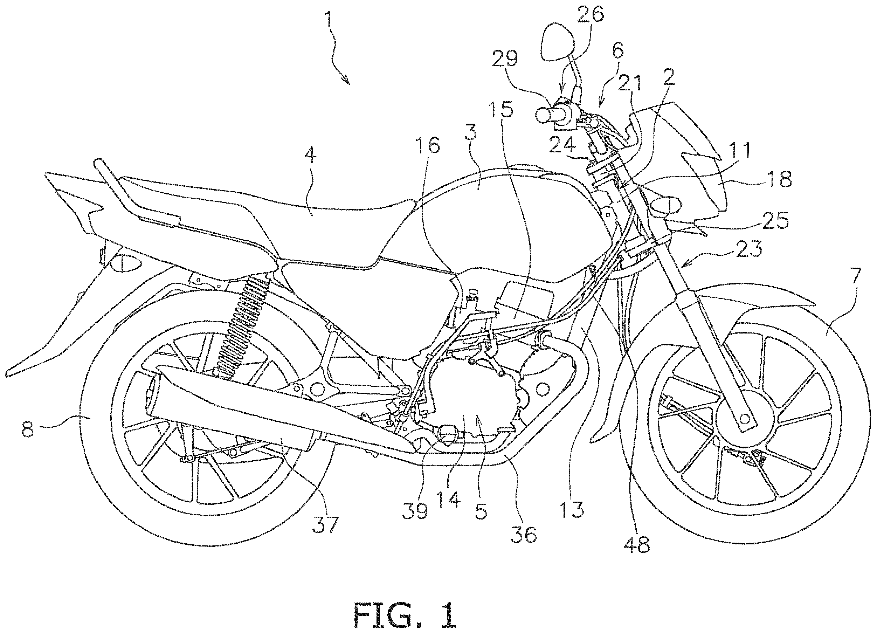

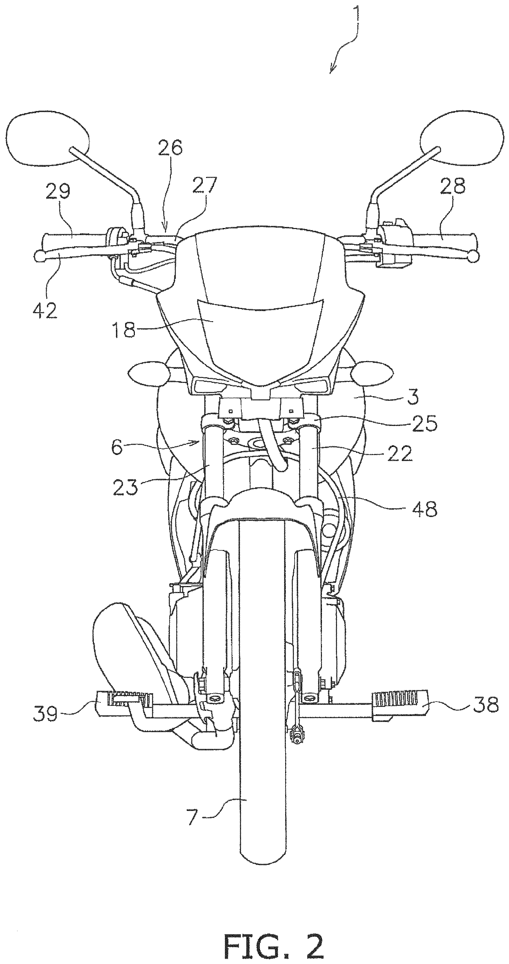

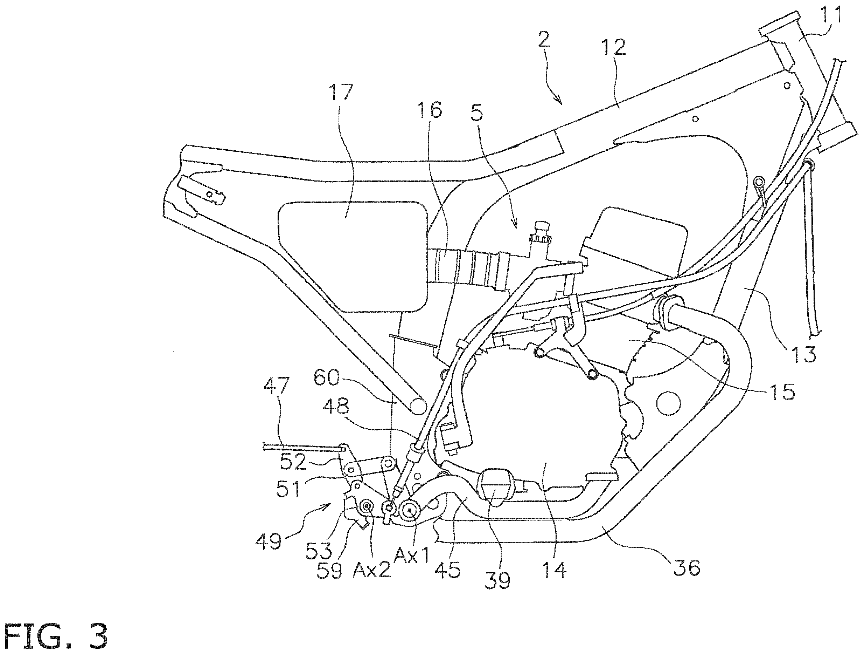

A straddled vehicle according to an exemplary embodiment will be hereinafter explained with reference to drawings. FIG. 1 is a right side view of a straddled vehicle 1 according to the exemplary embodiment. FIG. 2 is a front view of the straddled vehicle 1. FIG. 3 is a right side view of part of the straddled vehicle 1.

The straddled vehicle 1 according to the present exemplary embodiment is a motorcycle. As shown in FIGS. 1 and 2, the straddled vehicle 1 includes a vehicle body frame 2, a fuel tank 3, a seat 4, an engine 5, a steering device 6, a front wheel 7 and a rear wheel 8.

As shown in FIG. 3, the vehicle body frame 2 includes a head pipe 11, an upper frame 12 and a lower frame 13. The head pipe 11 is disposed in the middle of the vehicle in a vehicle width direction, and extends forward and downward. A headlight 18 is disposed in front of the head pipe 11. The upper frame 12 is connected to the head pipe 11 and extends therefrom backward. The lower frame 13 is disposed at least in part below the upper frame 12. The lower frame 13 is connected to the head pipe 11 and extends therefrom backward and downward.

It should be noted that front, rear, right and left directions are defined as indicating front, rear, right and left directions seen from a driver seated on the seat 4. The expression "a given frame extends from the head pipe 11" encompasses a condition that the head pipe 11 and the given frame are directly connected to each other and a condition that the head pipe 11 and the given frame are indirectly connected to each other. The term "connection" is not limited to direct connection and encompasses indirect connection. Additionally, the term "connection" is not limited to a condition that separate members are fixed to each other, and encompasses a condition that a plurality of portions in an integrated member continue to each other.

As shown in FIGS. 1 and 2, the fuel tank 3 is disposed behind the head pipe 11. The seat 4 is disposed behind the fuel tank 3. The engine 5 is disposed below the fuel tank 3. The engine 5 is supported by the vehicle body frame 2. The engine 5 is disposed below at least part of the upper frame 12, while being disposed backward of at least part of the lower frame 13.

The engine 5 includes a crankcase 14, a cylinder 15 and an intake pipe 16. The cylinder 15 is disposed at least in part above the crankcase 14. The intake pipe 16 is connected to the cylinder 15. As shown in FIG. 3, the intake pipe 16 extends backward from the cylinder 15, and is connected to an air cleaner 17. It should be noted that in the present exemplary embodiment, the cylinder 15 is defined as including a cylinder head and a cylinder body.

The steering device 6 is turnably supported by the head pipe 11. The steering device 6 includes a steering shaft 21, a left suspension 22, a right suspension 23, an upper bracket 24, a lower bracket 25 and a handle member 26. The steering shaft 21 is inserted into the head pipe 11, and extends forward and downward. The upper bracket 24 is disposed above the head pipe 11 and is connected to the steering shaft 21. The lower bracket 25 is disposed below the head pipe 11 and is connected to the steering shaft 21.

The handle member 26 is connected to the upper bracket 24 and is operable by the driver. As shown in FIG. 2, the handle member 26 includes a handlebar 27, a left grip 28 and a right grip 29. The left grip 28 is attached to the left end of the handlebar 27. The right grip 29 is attached to the right end of the handlebar 27. It should be noted that in the present exemplary embodiment, the handle member 26 is of a so-called bar handle type that the right and left grips are integrally attached to the upper bracket 24 through the handlebar 27. However, the handle member 26 may be of a so-called separate handle type that the right and left grips are separately attached to the upper bracket 24.

The right and left suspensions 23 and 22 extend forward and downward. The right and left suspensions 23 and 22 support the front wheel 7 such that the front wheel 7 is rotatable. The front wheel 7 is disposed forward of the engine 5. The right and left suspensions 23 and 22 support the front wheel 7 such that the front wheel 7 is movable in the up-and-down direction. The left suspension 22 is disposed laterally leftward of the front wheel 7. The left suspension 22 is connected to the upper bracket 24 and the lower bracket 25, while being disposed in a position located laterally leftward of the head pipe 11. The right suspension 23 is disposed laterally rightward of the front wheel 7. The right suspension 23 is connected to the upper bracket 24 and the lower bracket 25, while being disposed in a position located laterally rightward of the head pipe 11.

The steering device 6 and the front wheel 7 are turned with respect to the head pipe 11 in conjunction with turning of the handle member 26 in the right-and-left direction. In other words, the steering shaft 21, the upper bracket 24, the lower bracket 25, the left suspension 22, the right suspension 23 and the front wheel 7 are turned in the right-and-left direction in conjunction with the motion of the handle member 26.

As shown in FIG. 1, the rear wheel 8 is supported by the vehicle body frame 2 through a swing arm (not shown in the drawing) . The swing arm is swingably attached to the vehicle body frame 2. The rear wheel 8 is disposed backward of the engine 5.

As shown in FIG. 1, the straddled vehicle 1 includes an exhaust pipe 36 and a muffler 37. The exhaust pipe 36 is connected to the cylinder 15 of the engine 5. The exhaust pipe 36 extends from the cylinder 15, then passes through a position below the engine 5, and extends backward. The exhaust pipe 36 is connected to the muffler 37.

The straddled vehicle 1 includes a left step 38 and a right step 39. The right and left steps 39 and 38 are members on which the driver puts his/her feet. The left step 38 protrudes laterally leftward of the engine 5. The right step 39 protrudes laterally rightward of the engine 5. The right and left steps 39 and 38 are attached to the bottom surface of the engine 5. Alternatively, the right and left steps 39 and 38 may be attached to the vehicle body frame 2.

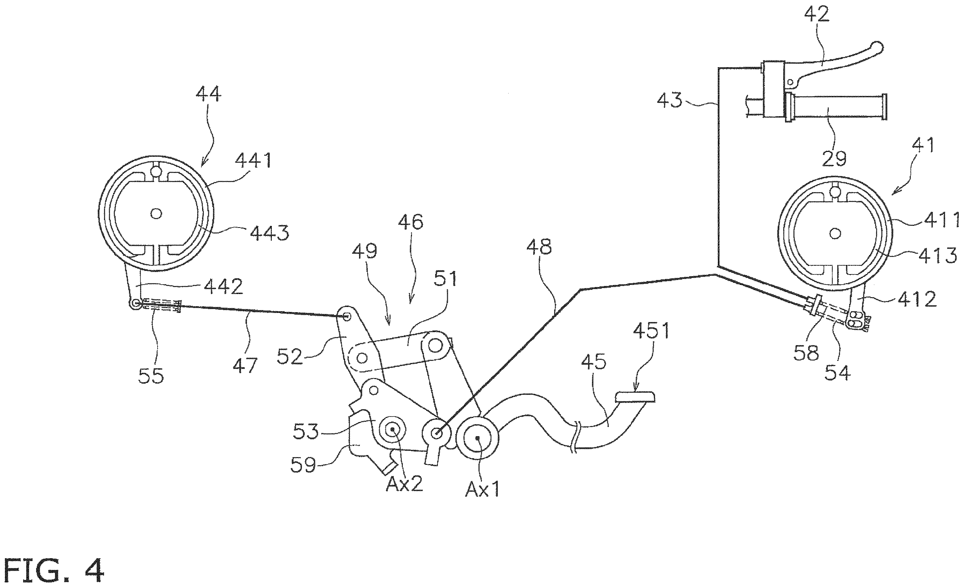

Next, a braking system of the straddled vehicle 1 will be explained. FIG. 4 is a schematic diagram showing a configuration of the braking system. As shown in FIG. 4, the braking system includes a front brake device 41, a brake lever 42, a front brake cable 43, a rear brake device 44, a brake pedal 45 and a combined brake device 46.

The front brake device 41 brakes the front wheel 7 in response to operating the brake lever 42. The front brake device 41 is a drum brake attached to the front wheel 7. The front brake device 41 includes a drum 411, a brake arm 412 and a brake shoe 413. The drum 411 is attached to the front wheel 7, and is rotated together with the front wheel 7. The front brake cable 43 connects the brake lever 42 and the front brake device 41. The brake lever 42 is attached to the handle member 26. The brake lever 42 is disposed in front of the right grip 29. The front brake cable 43 pulls the brake arm 412 in conjunction with the brake lever 42 operated by the driver, whereby the brake shoe 413 is pressed onto the drum 411. Accordingly, the front wheel 7 is braked.

The rear brake device 44 brakes the rear wheel 8 in response to operating the brake pedal 45. The rear brake device 44 is a drum brake attached to the rear wheel 8. The rear brake device 44 includes a drum 441, a brake arm 442 and a brake shoe 443. The drum 441 is attached to the rear wheel 8 and is rotated together with the rear wheel 8.

The brake pedal 45 is a member to be operated by the driver with his/her foot. The brake pedal 45 is rotatably attached to the vehicle body frame 2. The brake pedal 45 is rotatable about a rotational axis Ax1 thereof (hereinafter referred to as "pedal rotational axis Ax1"). The brake pedal 45 is operated from a zero stroke position to a full stroke position. The zero stroke position means a position of the brake pedal 45 not being pressed down by the driver. On the other hand, the full stroke position means a position of the brake pedal 45 maximally pressed down by the driver.

A tread surface 451 of the brake pedal 45 is disposed, for instance, in front of the right step 39. The brake pedal 45 is connected to a rear brake transmission member 47 (to be described) through the combined brake device 46. The rear brake transmission member 47 pulls the brake arm 442 in conjunction with the brake pedal 45 operated by the driver, whereby the brake shoe 443 is pressed onto the drum 441.

The combined brake device 46 causes the rear brake device 44 and the front brake device 41 to be actuated in a linked manner. The combined brake device 46 includes the rear brake transmission member 47, a combined brake cable 48 and a combined actuation mechanism 49. The rear brake transmission member 47 is connected to the brake arm 442 of the rear brake device 44. The rear brake transmission member 47 is, for instance, a brake rod. However, the rear brake transmission member 47 may be a brake cable.

The combined brake cable 48 is connected to the brake arm 412 of the front brake device 41. The combined actuation mechanism 49 is connected to the brake pedal 45. The combined actuation mechanism 49 is connected to the front brake device 41 through the combined brake cable 48. The combined actuation mechanism 49 is connected to the rear brake device 44 through the rear brake transmission member 47. The combined actuation mechanism 49 transmits the motion of the brake pedal 45 to the rear brake device 44 and the front brake device 41.

The combined actuation mechanism 49 is disposed backward of at least part of the engine 5. The combined actuation mechanism 49 may be disposed backward of the entirety of the engine 5. Alternatively, the combined actuation mechanism 49 may be disposed backward of part of the engine 5, and may be disposed forward of the remainder of the engine 5.

It should be noted that the front brake device 41 includes a first front urging member 54 and a second front urging member 58. The first front urging member 54 is attached to the combined brake cable 48. The second front urging member 58 is attached to the front brake cable 43. The first and second front urging members 54 and 58 urge the brake arm 412 in a direction to turn the front brake device 41 into an unbraking state. Accordingly, when the brake lever 42 and the brake pedal 45 are in the zero stroke positions, the front brake device 41 is kept in the unbraking state by the urging force of the first front urging member 54 and that of the second front urging member 58. When either the brake lever 42 or the brake pedal 45 is operated, the brake arm 412 is actuated against the urging force of either the second front urging member 58 or the first front urging member 54, whereby the front brake device 41 is turned into a braking state. It should be noted that in the present exemplary embodiment, the first and second front urging members 54 and 58 are coil springs. However, any urging members other than the coil springs may be used as the first and second front urging members 54 and 58.

The rear brake device 44 includes a rear urging member 55. The rear urging member 55 urges the brake arm 442 in a direction to turn the rear brake device 44 into an unbraking state. Accordingly, when the brake pedal 45 is in the zero stroke position, the rear brake device 44 is kept in the unbraking state by the urging force of the rear urging member 55. When the brake pedal 45 is operated, the brake arm 442 is actuated against the urging force of the rear urging member 55, whereby the rear brake device 44 is turned into a braking state. It should be noted that in the present exemplary embodiment, the rear urging member 55 of the rear brake device 44 is a coil spring. However, any urging member other than the coil spring may be used as the rear urging member 55.

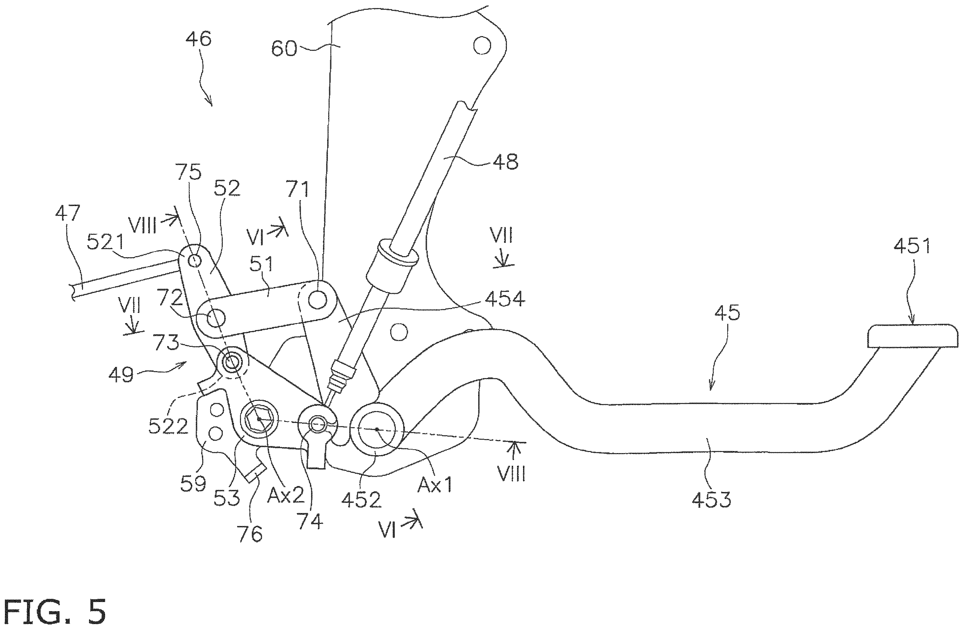

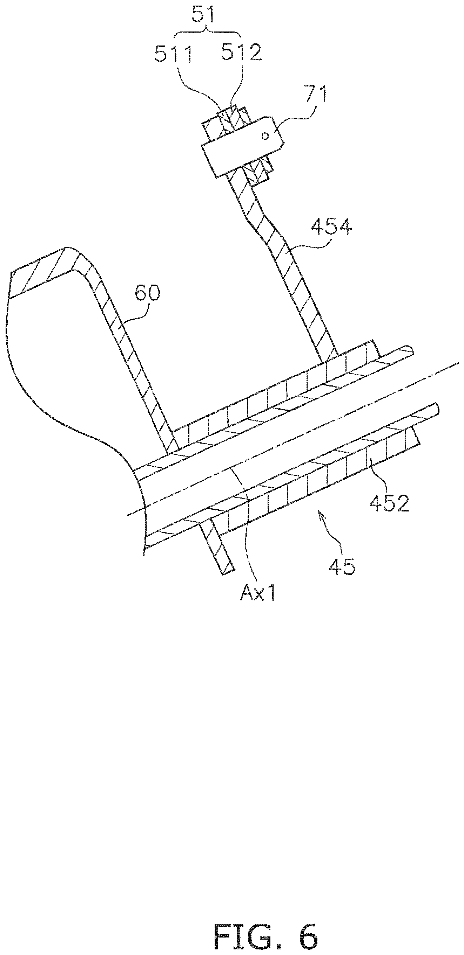

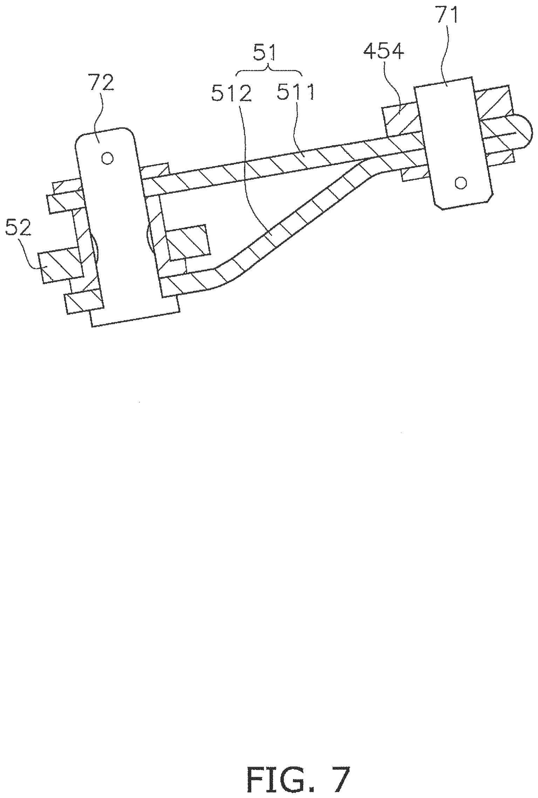

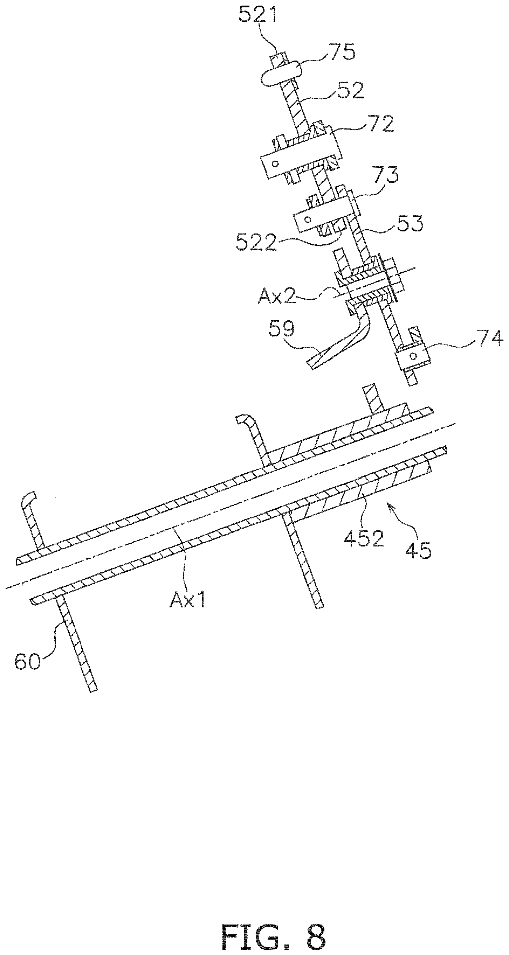

FIG. 5 is a right side view of the combined brake device 46. FIG. 6 is a cross-sectional view of FIG. 5 taken along line VI-VI. FIG. 7 is a cross-sectional view of FIG. 5 taken along line VII-VII. FIG. 8 is a cross-sectional view of FIG. 5 taken along line VIII-VIII.

The combined actuation mechanism 49 includes a first link member 51, an equalizer 52 and a second link member 53. The first link member 51 is rotatably connected to the brake pedal 45. The motion of the brake pedal 45 is transmitted to the equalizer 52 through the first link member 51. The equalizer 52 pulls the rear brake transmission member 47 in conjunction with the motion of the brake pedal 45, and simultaneously, actuates the second link member 53 in a direction that the combined brake cable 48 is pulled. Accordingly, the equalizer 52 distributes the operating force of the brake pedal 45 to the front brake device 41 and the rear brake device 44.

Detailedly, the brake pedal 45 includes a pedal shaft 452, a pedal body 453 and a pedal arm 454. The pedal shaft 452 is supported by the vehicle body frame 2 through a bracket 60. The pedal shaft 452 is supported while being rotatable with respect to the bracket 60. The aforementioned pedal rotational axis Ax1 is the center axis of the pedal shaft 452. The pedal body 453 forwardly extends from the pedal shaft 452. The pedal body 453 includes the tread surface 451 on the tip thereof. When the brake pedal 45 is in the zero stroke position, the pedal arm 454 extends upward and backward from the pedal shaft 452.

The combined actuation mechanism 49 includes a pedal connecting portion 71, a first link connecting portion 71, a second link connecting portion 73, a front brake connecting portion 74 and a rear brake connecting portion 75. In the following explanation, the positions of these connecting portions 71 to 75 are defined as meaning the positions of the center axes of these connecting portions 71 to 75, respectively.

The first link member 51 is connected to the pedal arm 454 by the pedal connecting portion 71. The first link member 51 is connected to the pedal arm 454 while being rotatable with respect thereto. When the brake pedal 45 is in the zero stroke position, the pedal connecting portion 71 is located backward of the pedal rotational axis Ax1. The pedal connecting portion 71 is located above the pedal rotational axis Ax1.

As shown in FIG. 6, the pedal connecting portion 71 is a pin provided separately from the first link member 51 and the pedal arm 454, and is inserted through one of holes provided in the first link member 51 and a hole provided in the pedal arm 454. However, the pedal connecting portion 71 may be provided as a portion integrated with the first link member 51 or the pedal arm 454.

The first link member 51 extends backward from the pedal connecting portion 71. The first link member 51 is connected to the equalizer 52 while being rotatable with respect thereto. The first link member 51 is connected to the equalizer 52 by the first link connecting portion 72. The first link connecting portion 72 is located backward of the pedal connecting portion 71.

As shown in FIGS. 6 and 7, the first link connecting portion 72 is a pin provided separately from the first link member 51 and the equalizer 52, and is inserted through the other of the holes provided in the first link member 51 and one of holes provided in the equalizer 52. However, the first link connecting portion 72 may be provided as a portion integrated with the first link member 51 or the equalizer 52.

As shown in FIG. 7, the first link member 51 includes a first plate portion 511 and a second plate portion 512. The first link member 51 is folded at a folded portion between the first plate portion 511 and the second plate portion 512 such that the first plate portion 511 and the second plate portion 512 are opposed to each other. The first plate portion 511 has a straight shape. The second plate portion 512 has a bent shape such that distance therefrom to the first plate portion 511 gradually increases toward the first link connecting portion 72. The equalizer 52 is disposed between the first plate portion 511 and the second plate portion 512.

The equalizer 52 is disposed behind the pedal arm 454. When the brake pedal 45 is in the zero stroke position, the equalizer 52 extends backward and upward. The equalizer 52 is connected to the rear brake transmission member 47. The equalizer 52 is connected to the second link member 53 while being rotatable with respect thereto. The second link member 53 is connected to the combined brake cable 48. In other words, the equalizer 52 is connected to the combined brake cable 48 through the second link member 53.

Detailedly, the equalizer 52 includes a first end 521 and a second end 522. The equalizer 52 is rotatably connected at a portion between the first end 521 and the second end 522 to the first link member 51. The equalizer 52 is rotatably connected at the first end 521 to the rear brake transmission member 47. The equalizer 52 is rotatably connected at the second end 522 to the second link member 53.

The first end 521 of the equalizer 52 is connected to the rear brake transmission member 47 by the rear brake connecting portion 75. The rear brake connecting portion 75 is located above the first link connecting portion 72. When the brake pedal 45 is in the zero stroke position, the rear brake connecting portion 75 is located backward of the first link connecting portion 72.

The rear brake connecting portion 75 is an end of the rear brake transmission member 47. For example, rear brake transmission member 47 is a brake rod, and a bent tip of the brake rod corresponds to the rear brake connecting portion 75. However, the rear brake connecting portion 75 may be a pin provided separately from the equalizer 52 and the rear brake transmission member 47, and may be inserted in another one of the holes provided in the equalizer 52. Alternatively, the rear brake connecting portion 75 may be integrated with the equalizer 52.

The second end 522 of the equalizer 52 is connected to the second link member 53 by the second link connecting portion 73. The second link connecting portion 73 is located below the first link connecting portion 72. When the brake pedal 45 is in the zero stroke position, the second link connecting portion 73 is located forward of the first link connecting portion 72.

The second link connecting portion 73 is a pin provided separately from the equalizer 52 and the second link member 53, and is inserted into the remaining one of the holes provided in the equalizer 52 and one of holes provided in the second link member 53. However, the second link connecting portion 73 may be integrated with the equalizer 52 or the second link member 53.

The first link connecting portion 72, the rear brake connecting portion 75 and the second link connecting portion 73 are located in straight alignment on the equalizer 52. A ratio, at which the operating force is distributed to the rear brake transmission member 47 and the combined brake cable 48, is set by a ratio (lever ratio) of distance between the rear brake connecting portion 75 and the first link connecting portion 72 and distance between the first link connecting portion 72 and the second link connecting portion 73.

The second link member 53 is attached to the vehicle body frame 2 through a bracket 59. The second link member 53 is connected to the bracket 59 while being rotatable with respect thereto. The second link member 53 is rotatable about a rotational axis Ax2 of the second link member 53 (hereinafter referred to as "link rotational axis Ax2") with respect to the bracket 59. The link rotational axis Ax2 is located backward of the pedal rotational axis Ax1.

The second link member 53 is disposed laterally to the bracket 59. The second link member 53 is disposed behind the pedal shaft 452. The second link member 53 is disposed below the equalizer 52. As shown in FIG. 3, the lower end of the second link member 53 is located above the bottom of the exhaust pipe 36.

The second link member 53 is rotatably connected to the combined brake cable 48. The second link member 53 is connected to the combined brake cable 48 by the front brake connecting portion 74. The front brake connecting portion 74 is a pin provided separately from the second link member 53, and is inserted into another one of the holes provided in the second link member 53. However, the front brake connecting portion 74 may be integrated with the second link member 53.

The front brake connecting portion 74, the link rotational axis Ax2 and the second link connecting portion 73 are not located in straight alignment on the second link member 53. The link rotational axis Ax2 is disposed to be downwardly away from a line segment connecting the front brake connecting portion 74 and the second link connecting portion 73.

The second link connecting portion 73 is located above the link rotational axis Ax2. The front brake connecting portion 74 is located below the link rotational axis Ax2. When the brake pedal 45 is in the zero stroke position, the second link connecting portion 73 is located backward of the link rotational axis Ax2.

The front brake connecting portion 74 is located forward of the link rotational axis Ax2. The front brake connecting portion 74 is located backward of the pedal rotational axis Ax1. When the brake pedal 45 is in the zero stroke position, the front brake connecting portion 74 is located above the pedal rotational axis Ax1. The front brake connecting portion 74 is located below the link rotational axis Ax2.

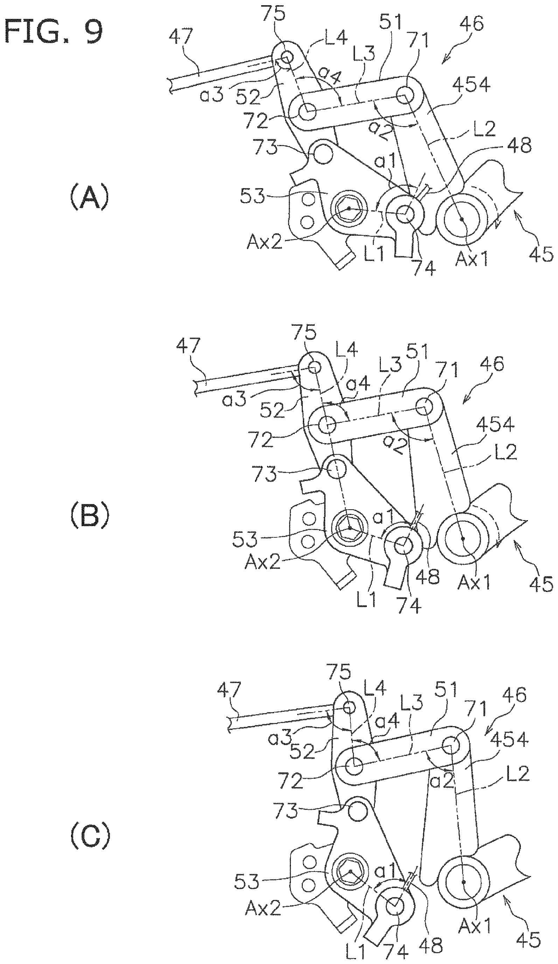

FIG. 9 is a diagram showing motions of the combined brake device 46. In the present exemplary embodiment, when the brake pedal 45 is pressed down in the zero stroke position and reaches a predetermined first stroke position, braking of the rear brake device 44 is started. When the brake pedal 45 is further pressed down and reaches a predetermined second stroke position, braking of the front brake device 41 is started. FIG. 9(A) shows the combined brake device 46 in the condition that the brake pedal 45 is in the zero stroke position. FIG. 9(C) shows the combined brake device 46 in the condition that the brake pedal 45 is in the full stroke position. FIG. 9(B) shows the combined brake device 46 in a transitional condition between the conditions of FIGS. 9(A) and 9(C).

When the driver presses down the tread surface 451 of the brake pedal 45, the brake pedal 45 is rotated about the pedal rotational axis Ax1. Accordingly, the pedal arm 454 is rotated, whereby the pedal connecting portion 71 is moved forward and thus the first link member 51 is moved forward. When the first link member 51 is moved forward, the equalizer 52 is rotated about the second link connecting portion 73, and simultaneously, the second link member 53 is moved about the link rotational axis Ax2. Accordingly, the equalizer 52 is moved forward, whereby the rear brake connecting portion 75 and the second link connecting portion 73 are moved forward. As a result, the rear brake transmission member 47 is pulled forward by the equalizer 52, whereby the rear brake device 44 is turned into the braking state. Additionally, the front brake connecting portion 74 is moved downward in conjunction with rotation of the second link member 53. Accordingly, the combined brake cable 48 is pulled downward by the second link member 53, whereby the front brake device 41 is turned into the braking state.

As shown in FIG. 9(A), in the condition that the brake pedal 45 is in the zero stroke position, a first angle a1 is an obtuse angle. The first angle a1 is formed between the combined brake cable 48 and a line segment L1 connecting the front brake connecting portion 74 and the link rotational axis Ax2. As shown in FIG. 9(C), in the condition that the brake pedal 45 is in the full stroke position, the first angle a1 is an acute angle. Therefore, the first angle varies from the obtuse angle to the acute angle in positional transition of the brake pedal 45 from the zero stroke position to the full stroke position. When the brake pedal 45 is located in a position between the second stroke position and the full stroke position, the first angle a1 becomes 90 degrees.

As shown in FIG. 9(A), in the condition that the brake pedal 45 is in the zero stroke position, a second angle a2 is an obtuse angle. The second angle a2 is formed between a line segment L2 and a line segment L3. The line segment L2 connects the pedal connecting portion 71 and the pedal rotational axis Ax1, whereas the line segment L3 connects the pedal connecting portion 71 and the first link connecting portion 72. As shown in FIG. 9(C), in the condition that the brake pedal 45 is in the full stroke position, the second angle a2 is an acute angle. Therefore, the second angle varies from the obtuse angle to the acute angle in positional transition of the brake pedal 45 from the zero stroke position to the full stroke position. When the brake pedal 45 is located in a position between the second stroke position and the full stroke position, the second angle a2 becomes 90 degrees.

As shown in FIG. 9(A), in the condition that the brake pedal 45 is in the zero stroke position, a third angle a3 is an obtuse angle. The third angle a3 is formed between the rear brake transmission member 47 and a line segment L4 connecting the rear brake connecting portion 75 and the first link connecting portion 72. As shown in FIG. 9(C), in the condition that the brake pedal 45 is in the full stroke position, the third angle a3 is an acute angle. Therefore, the third angle varies from the obtuse angle to the acute angle in positional transition of the brake pedal 45 from the zero stroke position to the full stroke position. When the brake pedal 45 is located in a position between the second stroke position and the full stroke position, the third angle a3 becomes 90 degrees.

As shown in FIG. 9(A), in the condition that the brake pedal 45 is in the zero stroke position, a fourth angle a4 is an obtuse angle. The fourth angle a4 is formed between a line segment L4 and the line segment L3 connecting the pedal connecting portion 71 and the first link connecting portion 72. The line segment L4 connects the rear brake connecting portion 75 and the first link connecting portion 72. As shown in FIG. 9(C), in the condition that the brake pedal 45 is in the full stroke position, the fourth angle a4 is an acute angle. Therefore, the fourth angle varies from the obtuse angle to the acute angle in positional transition of the brake pedal 45 from the zero stroke position to the full stroke position. When the brake pedal 45 is located in a position between the second stroke position and the full stroke position, the fourth angle a4 becomes 90 degrees.

As described above, when the brake pedal 45 is located in a position between the second stroke position and the full stroke position, each of the first to fourth angles a1 to a4 becomes 90 degrees. In other words, each of the first to fourth angles a1 to a4 varies in an angular range including 90 degrees in response to operating the brake pedal 45. When each of the first to fourth angles a1 to a4 is 90 degrees, the combined actuation mechanism 49 is capable of most efficiently transmitting the operating force from the brake pedal 45. Therefore, the operating force can be efficiently transmitted from the brake pedal 45 by the combined actuation mechanism 49 when each of the first to fourth angles a1 to a4 becomes 90 degrees in or after starting of braking the front brake device 41 and/or the rear brake device 44. It should be noted that the position of the brake pedal 45 may vary depending on which one of the first to fourth angles a1 to a4 becomes 90 degrees.

On the other hand, as shown in FIG. 9(B), in the condition that the brake pedal 45 is located in a predetermined position between the zero stroke position and the full stroke position, the link rotational axis Ax2, the second link connecting portion 73 and the first link connecting portion 72 are located in straight alignment. Accordingly, it is possible to enhance efficiency of transmitting the operating force from the first link member 51 through the equalizer 52 to the second link member 53.

It should be noted that an attachment load F58 of the aforementioned second front urging member 58 is greater than the sum of a value, obtained by multiplying an urging force F55 of the rear urging member 55 by both a lever ratio R52 of the equalizer 52 and a lever ratio R53 of the second link member 53, and a slide resistance F48 of the combined brake cable 48. In other words, this can be expressed as "F58>F55×R52×R53+F48".

The lever ratio R52 of the equalizer 52 is a ratio of distance L4 between the first link connecting portion 72 and the rear brake connecting portion 75 to distance L3 between the first link connecting portion 72 and the second link connecting portion 73. In other words, this can be expressed as "R52=L4/L3".

A lever ratio 53 of the second link member 53 is a ratio of distance L2 between the second link connecting portion 73 and the link rotational axis Ax2 to distance L1 between the front brake connecting portion 74 and the link rotational axis Ax2. In other words, this can be expressed as "R53=L2/L1".

Because of this, after rotation of the brake pedal 45 is started, rotation of the second link member 53 is started a little later than rotation of the equalizer 52. Accordingly, braking of the rear brake device 44 is started earlier than braking of the front brake device 41. In other words, braking of the front brake device 41 is started a little later than a point of time that braking of the rear brake device 44 is started.

When the driver releases the brake pedal 45, the brake pedal 45 is returned to the zero stroke position by the urging force of an urging member (not shown in the drawings) provided on the brake pedal 45. Accordingly, the front brake device 41 is returned to the unbraking state by the urging force of the first front urging member 54. On the other hand, the rear brake device 44 is returned to the unbraking state by the urging force of the rear urging member 55.

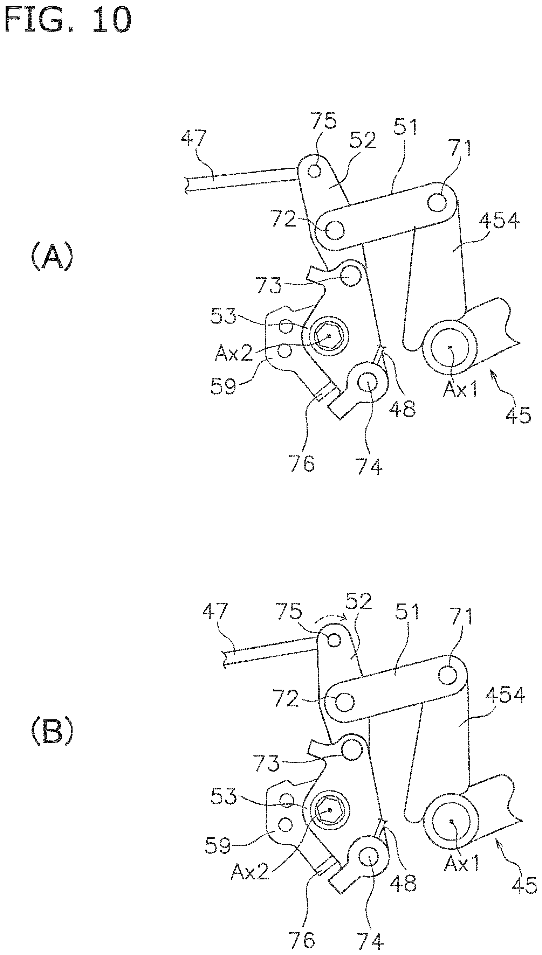

It should be noted that as shown in FIG. 5, the combined brake device 46 includes a stopper 76. The stopper 76 is provided on the bracket 59. As shown in FIG. 10(A), the stopper 76 restricts the second link member 53 from excessively rotating in a direction in which the combined brake cable 48 is pulled. The stopper 76 protrudes sideward from the bracket 59. The stopper 76 makes contact with the second link member 53 such that the front brake connecting portion 74 is restricted from moving backward.

When it is assumed that the stopper 76 is not provided, the second link member 53 is largely rotated in occurrence of sagging of the combined brake cable 48, whereby the stroke of the brake pedal 45 increases. In this case, deterioration in comfortableness in operation of the brake pedal 45 is concerned.

In the present exemplary embodiment, as shown in FIG. 10(A), even in occurrence of sagging of the combined brake cable 48, the second link member 53 is restricted from excessively rotating by the stopper 76. Therefore, as shown in FIG. 10(B), the equalizer 52 is rotated about the second link connecting portion 73 in conjunction with rotation of the brake pedal 45, whereby the rear brake transmission member 47 can be sufficiently pulled forward. Accordingly, increase in stroke of the brake pedal 45 can be inhibited, whereby comfortableness in operation can be enhanced.

In the straddled vehicle 1 according to the present exemplary embodiment explained above, the link rotational axis Ax2 is located backward of the pedal rotational axis Ax1. In other words, the second link member 53 is disposed non-concentrically to the brake pedal 45. Therefore, it is possible to inhibit a situation that the position of the second link member 53 is limited by the brake pedal 45 in the axis direction. Additionally, the second link member 53 and the brake pedal 45 are disposed away from each other. Because of this, reduction in each of the first to fourth angles a1 to a4 as connection angles among respective members can be inhibited. Accordingly, transmission efficiency can be enhanced among the respective members of the combined brake device 46, whereby comfortableness in operation of braking can be enhanced.

On the other hand, the front brake connecting portion 74 is located backward of the pedal rotational axis Ax1, and is simultaneously located forward of the link rotational axis Ax2. In other words, the second link member 53 is connected to the combined brake cable 48 in a position between the pedal rotational axis Ax1 and the link rotational axis Ax2 in the vehicle back-and-forth direction. Because of this, increase in size of the combined brake device 46 can be inhibited compared to a configuration that the front brake connecting portion 74 is located forward of the pedal rotational axis Ax1 or backward of the link rotational axis Ax2.

One exemplary embodiment of the present invention has been explained above. However, the present invention is not limited to the aforementioned exemplary embodiment, and a variety of changes can be made without departing from the gist of the present invention.

The straddled vehicle 1 is not limited to the motorcycle, and encompasses other types of vehicle such as an all-terrain vehicle. The number of the front wheels (7) is not limited to one, and alternatively, may be two or greater. The number of the rear wheels (8) is not limited to one, and alternatively, may be two or greater.

The configuration of the front brake device 41 is not limited to that of the aforementioned exemplary embodiment, and may be changed. For example, the front brake device 41 is not limited to the drum brake, and may be another type of brake such as a disc brake. The configuration of the rear brake device 44 is not limited to that of the aforementioned exemplary embodiment, and may be changed. For example, the rear brake device 44 is not limited to the drum brake, and may be another type of brake such as a disc brake.

The configuration of the combined brake device 46 is not limited to that of the aforementioned exemplary embodiment, and may be changed. For example, the shape or position of the first link member 51 may be changed. The shape or position of the equalizer 52 may be changed. The shape or position of the second link member 53 may be changed. The position of the pedal connecting portion 71, the first link connecting portion 72, the second link connecting portion 73, the front brake connecting portion 74 or the rear brake connecting portion 75 may be changed.

In the aforementioned exemplary embodiment, a delay spring is omitted, but the combined device may include the delay spring.

The terms and expressions, as used herein, are provided for the purpose of explanation, not of limitation to interpretation. It is to be recognized that there is no intention to exclude any equivalents of the features herein illustrated and described, and various modifications are possible within the scope claimed in the present invention. The present invention can be embodied in many different forms. The present disclosure should be considered to provide the principle embodiments of the present invention. Those embodiments are herein described with the understanding of not intending to limit the present invention to the embodiments herein described and/or illustrated. Thus, the present invention is not to be limited to those embodiments herein described. The present invention even encompasses all the embodiments including equivalent elements, modifications, deletions, combinations, improvements and/or changes, which could be recognized by a person skilled in the art based on the present disclosure and the appended claims. A limitation in a claim should be broadly interpreted based on terms used in the claim, and should not be limited to any of the embodiments described in the present specification or during prosecution of the present application.

### INDUSTRIAL APPLICABILITY

According to the present invention, increase in size of a combined brake device can be inhibited, and simultaneously, comfortableness in operation of braking can be enhanced.

### REFERENCE SIGNS LIST

2...Vehicle body frame, 5...Engine, 6...Steering device, 7...Front wheel, 8...Rear wheel, 11...Head pipe, 36...Exhaust pipe, 41...Front brake device, 44...Rear brake device, 46...Combined brake device, 47...Rear brake transmission member, 48...Combined brake cable, 51...First link member, 52...Equalizer, 53...Second link member, 54...First front urging member, 55...Rear urging member, 71...Pedal connecting portion, 72...First link connecting portion, 73...Second link connecting portion, 74...Front brake connecting portion, 75...Rear brake connecting portion, 76...Stopper

## Claims

1. A straddled vehicle (1) comprising:
a vehicle body frame (2) including a head pipe (11);
a steering device (6) turnably supported by the head pipe (11), the steering device (6) being configured to be operated with hands of a driver;
a front wheel (7) rotatably supported by the steering device (6);
a rear wheel (8) disposed backward of the steering device (6) and the front wheel (7);
a front brake device (41) for braking the front wheel (7);
a rear brake device (44) for braking the rear wheel (8);
a brake pedal (45) disposed between the front wheel (7) and the rear wheel (8) in a vehicle back-and-forth direction, the brake pedal (45) being supported by the vehicle body frame (2) so as to be rotatable about a pedal rotational axis (Ax1), the brake pedal (45) being configured to be operated with a foot of the driver; and
a combined brake device (46) causing the rear brake device (44) and the front brake device (41) to be actuated in a linked manner in response to operating the brake pedal (45), wherein
the combined brake device (46) includes
a combined brake cable (48) connected to the front brake device (41),
a rear brake transmission member (47) connected to the rear brake device (44),
a first link member (51) rotatably connected to the brake pedal (45), the first link member (51) being configured to be moved in conjunction with rotation of the brake pedal (45),
an equalizer (52) including a first end (521) and a second end (522), the equalizer (52) being rotatably connected at a part thereof located between the first end (521) and the second end (522) to the first link member (51), the equalizer (52) being configured to be moved in conjunction with movement of the first link member (51),
a second link member (53) attached to the vehicle body frame (2) so as to be rotatable about a link rotational axis (Ax2), the second link member (53) being rotatably connected to the equalizer (52), the second link member (53) being configured to be rotated about the link rotational axis (Ax2) in conjunction with movement of the equalizer (52),
a pedal connecting portion (71) connecting the brake pedal (45) and the first link member (51),
a first link connecting portion (72) connecting the first link member (51) and the equalizer (52),
a second link connecting portion (73) connecting the equalizer (52) and the second link member (53),
a front brake connecting portion (74) connecting the second link member (53) and the combined brake cable (48), the front brake connecting portion (74) being configured to pull the combined brake cable (48) when the second link member (53) is rotated in conjunction with the movement of the equalizer (52), and
a rear brake connecting portion (75) connecting the first end (521) of the equalizer (52) and the rear brake transmission member (47), the rear brake connecting portion (75) being configured to pull the rear brake transmission member (47) when the equalizer (52) is moved,
the link rotational axis (Ax2) is located backward of the pedal rotational axis (Ax1), and
the front brake connecting portion (74) is located backward of the pedal rotational axis (Ax1),
**characterized in that the**
front brake connecting portion (74) is further located forward of the link rotational axis (Ax2),
a first angle (a1) is an obtuse angle in a condition that the brake pedal (45) is in a zero stroke position, the first angle (a1) being formed between the combined brake cable (48) and a line segment connecting the front brake connecting portion (74) and the link rotational axis (Ax2), and
the first angle (a1) is an acute angle in a condition that the brake pedal (45) is in a full stroke position.

2. The straddled vehicle (1) according to claim 1, wherein
the first link member (51) extends backward from the pedal connecting portion (71),
the pedal connecting portion (71) is configured to be moved forward when the brake pedal (45) is rotated, and
the pedal connecting portion (71) is located backward of the pedal rotational axis (Ax1).

3. The straddled vehicle (1) according to claim 1 or 2, wherein
a second angle (a2) is an obtuse angle in a condition that the brake pedal (45) is in a zero stroke position, the second angle (a2) being formed between a line segment connecting the pedal connecting portion (71) and the pedal rotational axis (Ax1) and a line segment connecting the pedal connecting portion (71) and the first link connecting portion (72), and
the second angle (a2) is an acute angle in a condition that the brake pedal (45) is in a full stroke position.

4. The straddled vehicle (1) according to any of claims 1 to 3, wherein
a third angle (a3) is an obtuse angle in a condition that the brake pedal (45) is in a zero stroke position, the third angle (a3) being formed between the rear brake transmission member (47) and a line segment connecting the rear brake connecting portion (75) and the first link connecting portion (72), and
the third angle (a3) is an acute angle in a condition that the brake pedal (45) is in a full stroke position.

5. The straddled vehicle (1) according to any of claims 1 to 4, wherein the front brake connecting portion (74) is located above the pedal rotational axis (Ax1).

6. The straddled vehicle (1) according to any of claims 1 to 5, wherein the front brake connecting portion (74) is located below the link rotational axis (Ax2).

7. The straddled vehicle (1) according to any of claims 1 to 6, further comprising:
an exhaust pipe (36) connected to an engine (5), wherein
a lower end of the second link member (53) is located above a bottom of the exhaust pipe (36).

8. The straddled vehicle (1) according to any of claims 1 to 7, wherein the link rotational axis (Ax2), the second link connecting portion (73) and the first link connecting portion (72) are located in straight alignment in a condition that the brake pedal (45) is located in a predetermined position within a motion range thereof.

9. The straddled vehicle (1) according to any of claims 1 to 8, wherein the combined brake device (46) further includes a stopper (76), the stopper (76) restricting excessive rotation of the second link member (53).

10. The straddled vehicle (1) according to claim 9, further comprising:
a front urging member (54, 58) urging the combined brake cable (48) in a direction to keep the front brake device (41) in an unbraking state; and
a rear urging member (55) urging the rear brake transmission member (47) in a direction to keep the rear brake device (44) in an unbraking state, wherein
an attachment load of the front urging member (58) is greater than a sum of a slide resistance of the combined brake cable (48) and a value obtained by multiplying an urging force of the rear urging member (55) by a lever ratio of the equalizer (52).

## Patentansprüche

1. Ein Grätschsitzfahrzeug (1) umfassend:
einen Fahrzeugkörperrahmen (2), der ein Kopfrohr (11) beinhaltet;
eine Lenkeinrichtung (6), die rotierbar von dem Kopfrohr (11) gelagert ist, wobei die Lenkeinrichtung (6) konfiguriert ist, mit Händen eines Fahrers bedient zu werden;
ein Vorderrad (7), das rotierbar von der Lenkeinrichtung (6) gelagert ist;
ein Hinterrad (8), das rückwärtig der Lenkeinrichtung (6) und des Vorderrads (7) angeordnet ist;
eine Vorderbremseinrichtung (41) zum Bremsen des Vorderrads (7);
ein Rückbremseinrichtung (44) zum Bremsen des Hinterrads (8);
ein Bremspedal (45), das zwischen dem Vorderrad (7) und dem Hinterrad (8) in einer Fahrzeug-vorwärts-und-rückwärts-Richtung angeordnet ist, wobei das Bremspedal (45) von dem Fahrzeugkörperrahmen (2) gelagert ist, um um eine Pedalrotationsachse (Ax1) rotierbar zu sein, wobei das Bremspedal (45) konfiguriert ist, mit einem Fuß des Fahrers bedient zu werden; und
eine kombinierte Bremseinrichtung (46), die die Rückbremseinrichtung (44) und die Vorderbremseinrichtung (41) veranlasst, in einer verbundenen Weise in Erwiderung auf Betreiben des Bremspedals (45) aktiviert zu werden, wobei
die kombinierte Bremseinrichtung (46) beinhaltet
ein kombiniertes Bremskabel (48), das mit der Vorderbremseinrichtung (41) verbunden ist,
ein Rückbremsenübertragungselement (47), das mit der Rückbremseinrichtung (44) verbunden ist,
ein erstes Verbindungselement (51), das rotierbar mit dem Bremspedal (45) verbunden ist, wobei das erste Verbindungselement (51) konfiguriert ist, in Einklang mit Rotation des Bremspedals (45) bewegt zu werden,
ein Ausgleicher (52), der ein erstes Ende (521) und ein zweites Ende (522) beinhaltet, wobei der Ausgleicher (52) an einem Teil davon, der zwischen dem ersten Ende (521) und dem zweiten Ende (522) gelegen ist, rotierbar mit dem ersten Verbindungselement (51) verbunden ist, wobei der Ausgleicher (52) konfiguriert ist, in Einklang mit Bewegung des ersten Verbindungselements (51) bewegt zu werden;
ein zweites Verbindungselement (53), das an dem Fahrzeugkörperrahmen (2) angebracht ist, um rotierbar um eine Verbindungsrotationsachse (Ax2) zu sein, wobei das zweite Verbindungselement (53) rotierbar mit dem Ausgleicher (52) verbunden ist, das zweite Verbindungselement (53) konfiguriert ist, um die Verbindungsrotationsachse (Ax2) in Einklang mit Bewegung des Ausgleichers (52) rotiert zu werden,
einen Pedalanbindungsabschnitt (71), der das Bremspedal (45) und das erste Verbindungselement (51) verbindet,
einen ersten Verbindungsanbindungsabschnitt (72), der das erste Verbindungselement (51) und den Ausgleicher (52) verbindet,
einen zweiten Verbindungsanbindungsabschnitt (73), der den Ausgleicher (52) und das zweite Verbindungselement (53) verbindet,
einen Vorderbremsenanbindungsabschnitt (74), der das zweite Verbindungselement (53) und das kombinierte Bremskabel (48) verbindet, wobei der Vorderbremsenanbindungsabschnitt (74) konfiguriert ist, das kombinierte Bremskabel (48) zu ziehen, wenn das zweite Verbindungselement (53) in Einklang mit der Bewegung des Ausgleichers (52) rotiert wird, und ein Rückbremsenanbindungsabschnitt (75), der das erste Ende (521) des Ausgleichers (52) und das Rückbremsenübertragungselement (47) verbindet, wobei der Rückbremsenanbindungsabschnitt (75) konfiguriert ist, das Rückbremsenübertragungselement (47) zu ziehen, wenn der Ausgleicher (52) bewegt wird, die Verbindungsrotationsachse (Ax2) rückwärtig der Pedalrotationsachse (Ax1) gelegen ist, und
der Vorderbremsenanbindungsabschnitt (74) rückwärtig der Pedalrotationsachse (Ax1) gelegen ist,
**dadurch gekennzeichnet, dass**
der Vorderbremsenanbindungsabschnitt (74) weiterhin vor der Verbindungsrotationsachse (Ax2) gelegen ist,
ein erster Winkel (a1) ein stumpfer Winkel unter einer Bedingung ist, dass das Bremspedal (45) in einer Nullhubposition ist, wobei der erste Winkel (a1) zwischen dem kombinierten Bremskabel (48) und einem Liniensegment ausgebildet ist, das den Vorderbremsenanbindungsabschnitt (74) und die Verbindungsrotationsachse (Ax2) verbindet, und
der erste Winkel (a1) ein spitzer Winkel unter einer Bedingung ist, dass das Bremspedal (45) in einer Vollhubposition ist.

2. Das Grätschsitzfahrzeug (1) nach Anspruch 1, wobei
sich das erste Verbindungselement (51) rückwärts von dem Pedalanbindungsabschnitt (71) erstreckt,
der Pedalanbindungsabschnitt (71) konfiguriert ist, vorwärts bewegt zu werden, wenn das Bremspedal (45) rotiert wird, und
der Pedalanbindungsabschnitt (71) rückwärts der Pedalrotationsachse (Ax1) gelegen ist.

3. Das Grätschsitzfahrzeug (1) nach Anspruch 1 oder 2, wobei
ein zweiter Winkel (a2) ein stumpfer Winkel unter einer Bedingung ist, dass das Bremspedal (45) in einer Nullhubposition ist, wobei der zweite Winkel (a2) zwischen einem Liniensegment, das den Pedalanbindungsabschnitt (71) und die Pedalrotationsachse (Ax1) verbindet, und einem Liniensegment ausgebildet ist, das den Pedalanbindungsabschnitt (71) und den ersten Verbindungsanbindungsabschnitt (72) verbindet, und
der zweite Winkel (a2) ein spitzer Winkel unter einer Bedingung ist, dass das Bremspedal (45) in einer Vollhubposition ist.

4. Das Grätschsitzfahrzeug (1) nach irgendeinem der Ansprüche 1 bis 3, wobei ein dritter Winkel (a3) ein stumpfer Winkel unter einer Bedingung ist, dass das Bremspedal (45) in einer Nullhubposition ist, wobei der dritte Winkel (a3) zwischen dem Rückbremsenübertragungselement (47) und einem Liniensegment ausgebildet ist, das den Rückbremsenanbindungsabschnitt (75) und den ersten Verbindungsanbindungsabschnitt (72) verbindet, und
der dritte Winkel (a3) ein spitzer Winkel unter einer Bedingung ist, dass das Bremspedal (45) in einer Vollhubposition ist.

5. Das Grätschsitzfahrzeug (1) nach irgendeinem der Ansprüche 1 bis 4, wobei der Vorderbremsenanbindungsabschnitt (74) über der Pedalrotationsachse (Ax1) gelegen ist.

6. Das Grätschsitzfahrzeug (1) nach irgendeinem der Ansprüche 1 bis 5, wobei der Vorderbremsenanbindungsabschnitt (74) unter der Verbindungsrotationsachse (Ax2) gelegen ist.

7. Das Grätschsitzfahrzeug (1) nach irgendeinem der Ansprüche 1 bis 6, weiterhin umfassend:
ein Auspuffrohr (36), das mit einem Motor (5) verbunden ist, wobei
ein unteres Ende des zweiten Verbindungselements (53) über einer Unterseite des Auspuffrohrs (36) gelegen ist.

8. Das Grätschsitzfahrzeug (1) nach irgendeinem der Ansprüche 1 bis 7, wobei die Verbindungsrotationsachse (Ax2), der zweite Verbindungsanbindungsabschnitt (73) und der erste Verbindungsanbindungsabschnitt (72) in gerader Ausrichtung unter einer Bedingung gelegen sind, das das Bremspedal (45) in einer vorbestimmten Position innerhalb eines Bewegungsbereichs davon gelegen ist.

9. Das Grätschsitzfahrzeug (1) nach irgendeinem der Ansprüche 1 bis 8, wobei die kombinierte Bremseinrichtung (46) weiterhin einen Anschlag (76) beinhaltet, wobei der Anschlag (76) exzessive Rotation des zweiten Verbindungselements (53) beschränkt.

10. Das Grätschsitzfahrzeug (1) nach Anspruch 9, weiterhin umfassend:
ein vorderes Triebelement (54, 58), das das kombinierte Bremskabel (48) in einer Richtung treibt, um die Vorderbremseinrichtung (41) in einem nicht bremsenden Zustand zu halten; und ein hinteres Triebelement (55), das das Rückbremsenübertragungselement (47) in einer Richtung treibt, um die Rückbremseinrichtung (44) in einem nicht bremsenden Zustand zu halten, wobei
eine Anbringungslast des vorderen Triebelements (58) größer ist als eine Summe eines Gleitwiderstands des kombinierten Bremskabels (48) und eines Wertes, der durch Multiplizieren einer Triebkraft des hinteren Triebelements (55) mit einem Hebelverhältnis des Ausgleichers (52) erhalten wird.

## Revendications

1. Véhicule à enfourcher (1) comprenant :
un corps de châssis (2) de véhicule comprenant un tube de tête (11) ;
un dispositif de direction (6) supporté d'une manière lui permettant de tourner par le tube de tête (11), le dispositif de direction (6) étant configuré pour être manœuvré par les mains d'un conducteur ;
une roue avant (7) supportée en rotation par le dispositif de direction (6) ;
une roue arrière (8) disposée en arrière du dispositif de direction (6) et de la roue avant (7) ;
un dispositif de frein avant (41) destiné à freiner la roue avant (7) ;
un dispositif de frein arrière (44) destiné à freiner la roue arrière (8) ;
une pédale de frein (45) disposée entre la roue avant (7) et la roue arrière (8) dans une direction avant-arrière du véhicule, la pédale de frein (45) étant supportée par le châssis de carrosserie (2) de véhicule de manière à pouvoir tourner autour d'un axe de rotation de pédale (Ax1), la pédale de frein (45) étant configurée pour être manœuvrée par un pied du conducteur ; et
un dispositif de frein combiné (46) permettant un actionnement du dispositif de frein arrière (44) et du dispositif de frein avant (41) d'une manière couplée en réponse à une manœuvre de la pédale de frein (45), dans lequel
le dispositif de frein combiné (46) comprend
un câble de frein combiné (48) relié au dispositif de frein avant (41),
un élément de transmission de frein arrière (47) relié au dispositif de frein arrière (44),
un premier élément de liaison (51) connecté en rotation à la pédale de frein (45), le premier élément de liaison (51) étant configuré pour être déplacé conjointement à une rotation de la pédale de frein (45),
un égaliseur (52) comprenant une première extrémité (521) et une seconde extrémité (522), l'égaliseur (52) étant connecté en rotation, au niveau de sa partie située entre la première extrémité (521) et la seconde extrémité (522), au premier élément de liaison (51), l'égaliseur (52) étant configuré pour être déplacé conjointement à un mouvement du premier élément de liaison (51),
un second élément de liaison (53) fixé au châssis de carrosserie (2) du véhicule de manière à pouvoir tourner autour d'un axe de rotation de liaison (Ax2), le second élément de liaison (53) étant connecté en rotation à l'égaliseur (52), le second élément de liaison (53) étant configuré pour effectuer une rotation autour de l'axe de rotation de liaison (Ax2) conjointement à un mouvement de l'égaliseur (52),
une partie de connexion de pédale (71) qui relie la pédale de frein (45) et le premier élément de liaison (51),
une partie de connexion de première liaison (72) qui relie le premier élément de liaison (51) et l'égaliseur (52),
une partie de connexion de seconde liaison (73) qui relie l'égaliseur (52) et le second élément de liaison (53),
une partie de connexion de frein avant (74) qui relie le second élément de liaison (53) et le câble de frein combiné (48), la partie de connexion de frein avant (74) étant configurée pour tirer le câble de frein combiné (48) lorsque le second élément de liaison (53) effectue une rotation conjointement au mouvement de l'égaliseur (52), et
une partie de connexion de frein arrière (75) qui relie la première extrémité (521) de l'égaliseur (52) et l'élément de transmission de frein arrière (47), la partie de connexion de frein arrière (75) étant configurée pour tirer l'élément de transmission de frein arrière (47) lorsque l'égaliseur (52) est déplacé,
l'axe de rotation de liaison (Ax2) est situé en arrière de l'axe de rotation de pédale (Ax1), et
la partie de connexion de frein avant (74) est située en arrière de l'axe de rotation de pédale (Ax1),
**caractérisé en ce que**
la partie de connexion de frein avant (74) est en outre située en avant de l'axe de rotation de liaison (Ax2),
un premier angle (a1) est un angle obtus lorsque la pédale de frein (45) se trouve en position de course nulle, le premier angle (a1) étant formé entre le câble de frein combiné (48) et un segment de droite reliant la partie de connexion de frein avant (74) et l'axe de rotation de liaison (Ax2), et
le premier angle (a1) est un angle aigu lorsque la pédale de frein (45) se trouve en position de pleine course.

2. Véhicule à enfourcher (1) selon la revendication 1, dans lequel
le premier élément de liaison (51) s'étend vers l'arrière depuis la partie de connexion de pédale (71),
la partie de connexion de pédale (71) est configurée pour être déplacée vers l'avant lorsque la pédale de frein (45) effectue une rotation, et
la partie de connexion de pédale (71) est située en arrière de l'axe de rotation de pédale (Ax1).

3. Véhicule à enfourcher (1) selon la revendication 1 ou 2, dans lequel
un deuxième angle (a2) est un angle obtus lorsque la pédale de frein (45) se trouve en position de course nulle, le deuxième angle (a2) étant formé entre un segment de droite reliant la partie de connexion de pédale (71) et l'axe de rotation de pédale (Ax1) et un segment de droite reliant la partie de connexion de pédale (71) et la partie de connexion de première liaison (72), et
le deuxième angle (a2) est un angle aigu lorsque la pédale de frein (45) se trouve en position de pleine course.

4. Véhicule à enfourcher (1) selon l'une quelconque des revendications 1 à 3, dans lequel
un troisième angle (a3) est un angle obtus lorsque la pédale de frein (45) se trouve en position de course nulle, le troisième angle (a3) étant formé entre l'élément de transmission de frein arrière (47) et un segment de droite reliant la partie de connexion de frein arrière (75) et la partie de connexion de première liaison (72), et
le troisième angle (a3) est un angle aigu lorsque la pédale de frein (45) se trouve en position de pleine course.

5. Véhicule à enfourcher (1) selon l'une quelconque des revendications 1 à 4, dans lequel partie de connexion de frein avant (74) est située au-dessus de l'axe de rotation de pédale (Ax1).

6. Véhicule à enfourcher (1) selon l'une quelconque des revendications 1 à 5, dans lequel la partie de connexion de frein avant (74) est située en dessous de l'axe de rotation de liaison (Ax2).

7. Véhicule à enfourcher (1) selon l'une quelconque des revendications 1 à 6, comprenant en outre :
un tuyau d'échappement (36) connecté à un moteur (5), dans lequel
une extrémité inférieure du second élément de liaison (53) est située au-dessus d'une partie basse du tuyau d'échappement (36).

8. Véhicule à enfourcher (1) selon l'une quelconque des revendications 1 à 7, dans lequel l'axe de rotation de liaison (Ax2), la partie de connexion de seconde liaison (73) et la partie de connexion de première liaison (72) sont alignés de manière rectiligne lorsque la pédale de frein (45) se trouve en position prédéterminée de sa plage de mouvement.

9. Véhicule à enfourcher (1) selon l'une quelconque des revendications 1 à 8, dans lequel le dispositif de frein combiné (46) comprend en outre un arrêt (76), l'arrêt (76) empêchant une rotation excessive du second élément de liaison (53).

10. Véhicule à enfourcher (1) selon la revendication 9, comprenant en outre :
un élément de contrainte avant (54, 58) contraignant le câble de frein combiné (48) dans une direction pour maintenir le dispositif de frein avant (41) dans un état de non freinage ; et
un élément de contrainte arrière (55) contraignant l'élément de transmission de frein arrière (47) dans une direction pour maintenir le dispositif de frein arrière (44) dans un état de non freinage, dans lequel
une charge de fixation de l'élément de contrainte avant (58) est supérieure à la somme d'une résistance de glissement du câble de frein combiné (48) et d'une valeur obtenue en multipliant une force de contrainte de l'élément de contrainte arrière (55) par un rapport de levier de l'égaliseur (52).
